(19) **Europäisches Patentamt**
**European Patent Office**
**Office européen des brevets**

(11) **EP 4 298 722 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **21723956.5**

(22) Anmeldetag: **03.05.2021**

(51) Internationale Patentklassifikation (IPC):
**H02P 6/18** (2016.01)

(52) Gemeinsame Patentklassifikation (CPC):
**H02P 6/183**

(86) Internationale Anmeldenummer:
**PCT/EP2021/061571**

(87) Internationale Veröffentlichungsnummer:
**WO 2022/233384 (10.11.2022 Gazette 2022/45)**

(54) **VERFAHREN UND VORRICHTUNG ZUR IDENTIFIKATION DER ANISOTROPIE EINER ELEKTRISCHEN DREHFELDMASCHINE**

METHOD AND DEVICE FOR IDENTIFYING THE ANISOTROPY OF AN ELECTRIC ROTATING FILED MACHINE

PROCÉDÉ ET DISPOSITIF D'IDENTIFICATION DE L'ANISOTROPIE D'UNE MACHINE ÉLECTRIQUE À CHAMP TOURNANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.01.2024 Patentblatt 2024/01**

(73) Patentinhaber: **KOSTAL Drives Technology GmbH**
**58513 Lüdenscheid (DE)**

(72) Erfinder:
• **LANDSMANN, Peter**
**80807 München (DE)**

• **PAULUS, Dirk**
**81669 München (DE)**
• **KÜHL, Sascha**
**81671 München (DE)**

(74) Vertreter: **Kerkmann, Detlef**
**Leopold Kostal GmbH & Co. KG**
**An der Bellmerei 10**
**58513 Lüdenscheid (DE)**

(56) Entgegenhaltungen:
**DE-A1- 102015 217 986     DE-A1- 102018 006 657**

**Beschreibung**

Die heute etablierte, performante und hocheffiziente Ansteuerung von Synchronmaschinen beruht auf der Kenntnis des Rotorlagesignals. Denn ein sogenanntes Rotorlage-Feedback ermöglicht den Einsatz von Effizienz- und Leistungs-optimalen Motorregelverfahren und zudem die Erfüllung von übergeordnete Aufgaben, wie Drehzahlregelung oder Positionierung. Üblicherweise erfolgt die Messung der Rotorlage im Betrieb mittels eines Sensors, der an der Rotorwelle angebracht ist - der sogenannte Rotorlagegeber oder kurz Geber.

Geber bringen eine Reihe von Nachteilen mit sich, wie z.B. erhöhte Systemkosten, verringerte Robustheit, erhöhte Ausfallwahrscheinlichkeit und größerer Bauraumbedarf, die das große industrielle Interesse begründen, das Lagesignal ohne Verwendung eines Gebers zu gewinnen.

Verfahren, die dies ermöglichen, werden als "geberlose" oder "sensorlose" Regelung bezeichnet und teilen sich in 2 Klassen auf:

1. Grundwellenverfahren werten die unter Bewegung induzierte Spannung aus, liefern bei mittleren und hohen Drehzahlen sehr gute Signal-Eigenschaften, aber versagen im unteren Drehzahlbereich, insbesondere bei Stillstand.

2. Anisotropieverfahren werten die Lageabhängigkeit der Induktivität der Maschine aus. Dies erfordert keine Mindestdrehzahl (funktioniert also auch im Stillstand), aber dafür die zusätzliche Einprägung hochfrequenter Spannungssignale - die sog. Injektion. Anisotropieverfahren weisen mehrere Probleme und Hürden auf, die erklären, warum bei vielen Anwendungen bis heute ein Lagegeber (mit seinen Nachteilen) eingesetzt werden muss.

Anisotropieverfahren lassen sich weiterhin in 2 Stufen unterteilen. Die erste Stufe ist die Anisotropie-Identifikation, die aus der eingespeisten Spannung und der resultierenden Stromantwort, die Komponenten des Anisotropie-Vektors berechnet. Beispiele für diese Stufe betreffende Verfahren finden sich in [1], [2], [3], [4], [5]. Die zweite Stufe ist die Rotorlage-Zuordnung, in welcher dem gemessenen Anisotropie-Vektor eine Rotorlage zugeordnet wird. Beispiele hierfür finden sich in [6] [7] [8] [9]. Diese Erfindung betrifft die erste Stufe und eignet sich zur Kombination mit jedem Verfahren der zweiten Stufe.

Zur Identifikation der Anisotropie werden der Grundwellenspannung, welche vom Stromregler gestellt wird, hochfrequente Spannungssignalanteile überlagert, die als Spannungsinjektion oder kurz Injektion bezeichnet werden. Diese hochfrequenten Anteile führen, auch im Stillstand des Rotors, zu einer hochfrequenten Stromveränderung, der sog. Injektionsantwort, aus der die Induktivität bzw. die Admittanz der Maschine berechenbar ist. Die in der Literatur vorgeschlagenen Injektionsverfahren unterscheiden sich vor allem hinsichtlich des zugrundeliegenden Injektionsmusters und der infolgedessen erforderlichen Algorithmen zur Admittanzberechnung. So wird beispielsweise in [1] pulsförmig, in [2] rotierend, in [3] alternierend, in [5] quadratisch und in [4] dreieckig injiziert, wobei nur letzteres Verfahren auch andere Injektionsformen auswerten könnte. Darunter liefert einzig die alternierende Injektion nur unvollständige Informationen über die Admittanz, weil nur 2 von 3 Dimensionen der Admittanz einer Drehfeldmaschine ermittelt werden können, was für fortgeschrittene Auswerteverfahren [10] nicht genügt. Dreieckige und quadratische Injektion sind die schnellst drehenden Spezialfälle der rotierenden Injektion und verwenden dazu jeweils eine zeitdiskrete Auswertevorschrift.

Eine der größten Hürden für dein Einsatz von Anisotropieverfahren ist das durch die Injektion verursachte akustische Geräusch (meist ein Piepen im unteren Drehzahlbereich), weil dies den Einsatz des geberlosen Antriebs nahe am Menschen erschweren oder verhindern kann.

Injektionsverfahren sind für ihre akustische Geräuschemission bekannt, denn die Injektion ruft leichte Magnetfeldvariationen und dadurch mechanische Schwingungen hervor, die u.a. vom Motorgehäuse mehr oder weniger laut akustisch abgestrahlt werden. Diese Geräuschemission wird oft als störend wahrgenommen und erschwert den Einsatz geberloser Verfahren in Anwendungen nahe am Menschen. Konstruktive Maßnahmen oder auch die Wahl einer Injektionsfrequenz außerhalb einer Resonanzfrequenz des Motorgehäuses können das Geräusch reduzieren. Eine subjektiv völlig geräuschlose Injektion ist jedoch nur möglich, wenn die Injektionsfrequenz über der Hörschwelle platziert wird

$$f_{inj} \geq 20kHz \qquad\qquad (1)$$

Abhängig von der Länge $n_{inj}$ des Injektionsmusters, welche beispielsweise bei alternierender Injektion $n_{inj} = 2$, bei Dreiecksinjektion $n_{inj} = 3$ oder bei Quadratinjektion $n_{inj} = 4$ $n_{inj}$ beträgt, erfordern bisherige Verfahren mindestens eine $n_{inj}$-fache Strom-Abtastfrequenz $f_s$

$$f_s = n_{inj}f_{inj} \geq n_{inj}20kHz \qquad\qquad (2)$$

um die Injektionsantwort einer lautlosen Injektion zu erfassen. Dabei ist eine hohe Abtastfrequenz selbst nicht problematisch.

Jedoch ist bei preiswerten Strommessprinzipien wie der sog. Emittershunt-Messung (Messwiderstände im unteren Zweig der Halbbrücken) nur eine Stromwert-Erfassung pro Pulsweitenmodulation(PWM)-Periode möglich und folglich benötigen bisherige Verfahren für eine lautlose Injektion mindestens folgende PWM-Frequenz $f_{pwm}$

$$f_{pwm} = f_s = n_{inj} f_{inj} \geq n_{inj} 20kHz \qquad (3)$$

Das heißt, unter Einsatz eines günstigen Strommessprinzips kann alternierende Injektion erst ab einer PWM-Frequenz $f_{pwm} \geq 40kHz$, Dreiecksinjektion ab $f_{pwm} \geq 60kHz$ und Quadratinjektion ab $f_{pwm} \geq 80kHz$ geräuschlos umgesetzt werden, während ohne Injektionsverfahren eine 20kHz PWM bereits geräuschlos ist. Diese vielfache Erhöhung der PWM Frequenz führt zu signifikanten Nachteilen unter anderem hinsichtlich Schaltverlusten, elektromagnetischer Verträglichkeit (EMV) und Spannungsgenauigkeit, welche in Summe den Einsatz des Geberlosverfahrens verhindern können.

Das vorgestellte Verfahren zeigt, wie durch eine bestimmte Realisierung der ersten Stufe von Anisotropieverfahren, der sog. Anisotropie-Identifikation, ein für den Menschen wahrnehmbares Geräusch vollständig vermieden werden kann, ohne bei günstiger Hardware die Schaltfrequenz vielfach erhöhen zu müssen.

Dazu wird das Nyquist-Shannon-Abtasttheorem gezielt missachtet und die Injektion mit einer Frequenz von mehr als der halben Abtastfrequenz eingeprägt. Es wird gezeigt, dass dann durch den Einsatz bestimmter Auswertungsgleichungen die Anisotropie-Information aus sogenannten Aliassignalen der Stromantwort gewonnen werden kann.

Als Alias-Effekte werden im Bereich der Signalanalyse üblicherweise Fehler bezeichnet, die auftreten, wenn im abzutastenden Signal Frequenzanteile vorkommen, die höher sind als die auch als Nyquist-Frequenz bezeichnete halbe Abtastfrequenz. Solche Frequenzanteile werden dabei als niedrigere Frequenzen interpretiert, wobei die Bezeichnung Alias ausdrückt, dass sich die höheren Frequenzen sozusagen als eine andere (niedrigere) ausgeben. Um Alias-Effekte zu verhindern, werden etwa Tiefpassfilter eingesetzt, um die entsprechenden Frequenzanteile herausfiltern. Im Rahmen der vorliegenden Erfindung werden nun diese Aliassignale gerade nicht als unerwünscht betrachtet sondern im Gegenteil sogar ganz gezielt genutzt.

In einer besonderen Ausführungsform werden durch die zusätzliche Wahl eines bestimmen Spannungsmusters mögliche schwache Geräusche eliminiert, die in bestimmten Fällen aus der Überlagerung von Injektion und Grundwellenspannung entstehen können

Die DE102015217986A1 offenbart ein Verfahren zur Identifikation der magnetischen Anisotropie einer elektrischen Maschine mit den Merkmalen des Oberbegriffs des Anspruchs 1.

Die Erfindung ist in den unabhängigen Ansprüchen definiert.

Nachfolgend wird die Erfindung anhand der Figuren allgemein sowie in verschiedenen Ausführungsformen erklärt. Dabei zeigen:

Fig. 1 Ein Blockschaltbild des 2-stufigen Aufbaus von Anisotropieverfahren, wobei zwischen der Anisotropieidentifikation und der Rotorlagezuordnung unterschieden wird.

Fig. 2 Den Zeitverlauf von Spannung u mit sinusförmiger Injektion (oben) und resultierendem Strom i (unten, glatt) und Alias-Verlauf der Strom-Abtastwerte (unten, eckig) wenn die Strom-Abtastfrequenz geringer ist als die zweifache Injektionsfrequenz. Zusätzlich markiert sind die Intervallzeit $\Delta t_k$ einer Sub-Spannung $u_k$, die Intervallzeit der Stromabtastung $\Delta t$ und mittels der Pfeile die Abtastzeitpunkte der Stromwerte $i_0$ bis $i_7$, welche in der unteren eckigen Kurve durch Geradenstücke verbunden wurden.

Fig. 3 Einen Beispielhaften Zeitverlauf von Spannung in Statorkoordinaten $u_s^s = [u_\alpha \ u_\beta]^T$ (oberer Teil) und Strom in Statorkoordinaten $i_s^s = \begin{bmatrix} i_\alpha & i_\beta \end{bmatrix}^T$ (unterer Teil) während einer dreieckigen Spannungsinjektion mit einer Frequenz von 2/3 der PWM- und Strom-Abtastfrequenz. Die $\alpha$-Kompartente ist jeweils durchgezogen, die $\beta$-Komponente ist jeweils gestrichelt und der PWM-Counter gepunktet eingezeichnet. Zur oberen Spitze des PWM-Counters sind alle Halbbrücken unten durchgeschaltet und es erfolgt die Stromabtastung.

Fig. 4 Eine Darstellung des Verlaufs aus Fig. 3 in kartesischen Statorkoordinaten zur Visualisierung des Injektionsmusters und der umgekehrten Rotationsrichtung zwischen tatsächlicher Injektion und Aliassignal.

Fig. 5 Eine Injektion und Grundwellenspannungserzeugung mittels dreier Sub-Spannungszeiger, die jeweils ausschließlich in Phasenrichtung orientiert sind und deren PWM-Muster folglich nur aus jeweils einem aktiven Schaltzustand besteht.

Der Begriff "Maschine" wird hier im Sinne einer "elektrischen Maschine" also eines Elektromotors oder eines elektrischen Generators verwendet.

Die Admittanz Y einer Synchronmaschine entspricht für hochfrequente Anregung näherungsweise der inversen Induktivität L, welche bei magnetisch anisotropem Verhalten beide als Matrix zu beschreiben sind

$$Y_s^s \approx L_s^{s-1}. \tag{4}$$

Das Superskript steht dabei für das Koordinatensystem (KS), in diesem Fall Statorkoordinaten; das Subskript beschreibt die Größe näher, in diesem Fall den Bezug der Größe zur Statorwicklung. Die Admittanz beschreibt die Überführung eines anregenden Spannungsvektors $u_s^s$ in eine Stromantwort $\Delta i_s^s$

$$\Delta i_s^s = Y_s^s u_s^s \Delta t, \tag{5}$$

$$\begin{bmatrix} \Delta i_\alpha \\ \Delta i_\beta \end{bmatrix} = \begin{bmatrix} Y_{\alpha\alpha} & Y_{\alpha\beta} \\ Y_{\beta\alpha} & Y_{\beta\beta} \end{bmatrix} \begin{bmatrix} u_\alpha \\ u_\beta \end{bmatrix} \Delta t, \tag{6}$$

worin $\Delta t$ die Zeitspanne ist, in der die Spannung $u_s^s$ anlag und analog $\Delta i$ die Differenz zwischen Stromwerten $i_s^s$ vor und nach dieser Zeitspanne ist. Wenn die Welle rotiert und/oder ein Grundwellenstrom eingeregelt wird, kommen in (5) noch weitere Störterme hinzu, die im Rahmen der Anisotropie-Identifikation kompensiert werden müssen.

Die Anisotropie-Identifikation kann alternativ auch die Induktivität $L_s^s$ ermitteln

$$u_s^s = L_s^s \frac{\Delta i_s^s}{\Delta t}, \tag{7}$$

welche äquivalente Anisotropie-Informationen enthält und damit auf gleiche Weise einer Rotorlage zugeordnet werden kann. Die vorliegende Herleitung erfolgt am Beispiel einer identifizierten Admittanz $Y_s^s$, ist aber nicht darauf beschränkt.

Ziel der Anisotropie-Identifikation ist es nun, aus dem Verlauf der anregenden Spannung $u_s^s$ (z.B. Injektion) und der resultierenden Stromantwort $i_s^s$ auf die magnetische Anisotropie zu schließen - namentlich auf den sog. Anisotropievektor $y_\Delta^s$, dessen Einträge eine Linearkombination bestimmter Komponenten der Admittanzmatrix $Y_s^s$ sind

$$y_\Delta^s = \begin{bmatrix} y_{\Delta\alpha} \\ y_{\Delta\beta} \end{bmatrix} = \frac{1}{2} \begin{bmatrix} Y_{\alpha\alpha} - Y_{\beta\beta} \\ Y_{\alpha\beta} + Y_{\beta\alpha} \end{bmatrix}. \tag{8}$$

Dieser Vektor $y_\Delta^s$ zeigt bei vielen Maschinen eine deutliche Rotorlage-Abhängigkeit. Darüber hinaus ist für bestimmte Verfahren noch der isotrope Anteil $Y_\Sigma$ relevant, welcher sich durch eine weitere Linearkombination berechnen lässt

$$Y_\Sigma = \frac{1}{2} \left( Y_{\alpha\alpha} + Y_{\beta\beta} \right) \tag{9}$$

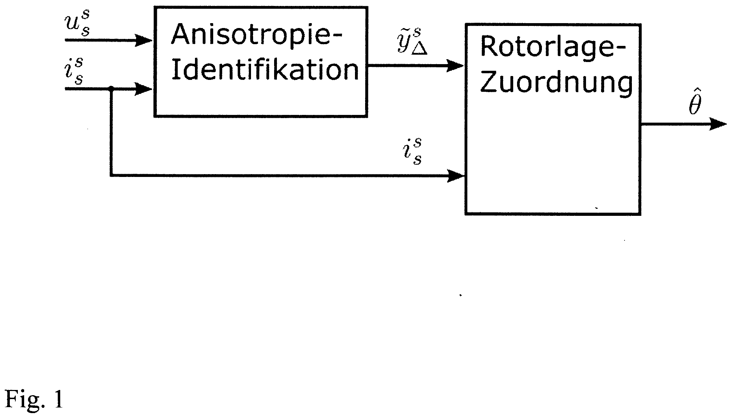

Zusammenfassend lassen sich Anisotropie-basierte Verfahren in 2 Stufen unterteilen, die in Fig. 1 dargestellt sind. Die erste Stufe ist die Anisotropie-Identifikation, die aus der eingespeisten Spannung und der gemessenen Stromantwort die Komponenten des Anisotropie-Vektors berechnet. Dieser auf Basis der aktuellen Messung berechnete Anisotropie-Vektor wird als gemessener Anisotropie-Vektor $\tilde{y}_\Delta^s$ bezeichnet und enthält im Kontrast zur physikalischen Maschineneigenschaft $y_\Delta^s$ beispielsweise typische Messfehler wie Rauschen etc. Die zweite Stufe ist die Rotorlage-Zuordnung, in welcher dem gemessenen Anisotropie-Vektor $\tilde{y}_\Delta^s$ ein Rotorlageschätzwert $\hat{\theta}$ zugeordnet wird. Diese Erfindung betrifft die erste Stufe, die Anisotropie-Identifikation.

Das Ziel, eine möglichst hohe Injektionsfrequenz $f_{inj}$ bei möglichst geringer PWM-Frequenz $f_{pwm}$ zu zu erhalten, wird nach obiger Erläuterung durch die Strommesswert-Erfassung beschränkt, jedoch genaugenommen nur deshalb, weil alle bisherigen Ansätze anstreben, die tatsächliche Injektionsantwort zu erfassen. Gemäß dem Nyquist-Shannon-Abtasttheorem muss dazu die Abtastfrequenz größer als die doppelte Signalfrequenz sein, d.h. zum Erfassen der tatsächlichen Injektionsantwort müssen mindestens zwei Messwerte pro Injektionsperiode erfasst werden.

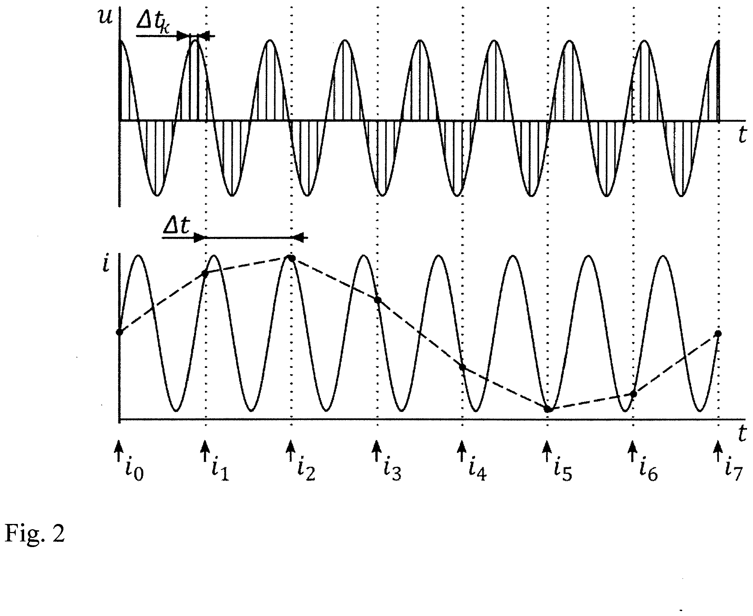

Die Grundidee der vorliegenden Erfindung ist nun, dass unter Missachtung des Nyquist-Shannon-Abtasttheorems - d.h. konkret unter Verwendung einer Periodendauer der Injektionsspannung die kürzer ist als das Zweifache der Zykluszeit der Strommessung - nicht etwa Nichts gemessen wird, sondern ein sogenanntes Alias-Signal $i_A^s$ der tatsächlichen Injektionsantwort (vgl. Fig. 2 gestrichelte Linie); und dass dieses Alias-Signal $i_A^s$ zum zugehörigen Alias-Signal der Injektionsspannung $u_A^s$ über den gleichen Admittanzwert $Y_s^s$ im Zusammenhang steht, wie die tatsächlichen Injektionssignale in (5)

$$\Delta i_A^s = Y_s^s u_A^s \Delta t \tag{10}$$

Das eigentliche Ziel des Admittanz-Informationsgewinns kann also auch erreicht werden, wenn nicht die vollständige Injektionsantwort erfasst wird, sondern nur ein Alias-Signal. Es darf hierbei lediglich die Injektionsfrequenz kein ganzzahliges Vielfaches der Abtastfrequenz sein, so dass sich das entsprechende Alias-Signal nicht zu Null ergibt.

Weil die Spannung nicht auf gleiche Weise abgetastet wird wie der Strom, sondern üblicherweise die Referenzspannung herangezogen wird, ist zum Erhalt des Alias-Signals der Injektionsspannung $u_A^s$ folgende Rechenvorschrift zu verwenden

$$u_A^s = \frac{1}{\Delta t} \sum_{k=1}^{n} u_k^s \Delta t_k \tag{11}$$

wobei k der Zählindex und n die Anzahl der verschiedenen Sub-Spannungswerte $u_k^s$ ist, die zwischen zwei Stromsamples angelegen haben - jeweils mit einer Zeitdauer $\Delta t_k$. Dabei entsprechen die Sub-Spannungswerte dem Spannungsreferenzwert, bzw. der mittleren Spannung über mindestens eine halbe PWM Periode.

Im Ergebnis führt diese gewichtete Mittelwertbildung (11) von der tatsächlichen Injektionsform (Dreieck, Quadrat, etc.) zu einem Alias-Spannungswert $u_A^s$, der über (10) mit der gemessenen Alias-Stromantwort $\Delta i_A^s$ zusammenhängt. Es kann also zur Admittanzberechnung ein Spannungswert herangezogen werden, der als gewichteter Mittelwert von mindestens zwei, sich unterscheidenden Sub-Spannungswerten gewichtet mit der Dauer des jeweiligen Anliegens berechnet wird.

Alternativ zur Aliasspannung, kann auch eine Alias-Flussdifferenz $\Delta\psi_A^s$ berechnet werden

$$\Delta\psi_A^s = u_A^s \Delta t = \sum_{k=1}^{n} u_k^s \Delta t_k \tag{12}$$

welche dann in (10) anstelle des zugehörigen Produktes eingesetzt würde.

In einem Ausführungsbeispiel wird eine subjektiv geräuschlose Injektion mit $f_{inj}$ = 20kHz eingeprägt und die Stromantwort mit $f_s$ = 30$kHz$ abgetastet, wozu beispielsweise bei Emittershunt-Messung (Messwiderstände im unteren Zweig der Halbbrücken der Leistungselektronik), deren schnellstmögliche Zykluszeit der PWM-Periodendauer gleicht, eine PWM-Frequenz von nur $f_{pwm}$ = 30$kHz$ erforderlich ist. Im Stromsignal nach der Abtastung $\Delta i_A^s$ ist dann eine Schwingung mit $f_A$ = -10$kHz$ zu erkennen. Wird die Spannungseinprägung einer entsprechenden Berechnung gemäß (11) unterzogen, so ergibt sich auch für die Injektionsspannung eine -10$kHz$ Schwingung, welche sich über die tatsächliche Admittanz $Y_s^s$ in Zusammenhang (10) mit der Stromantwort $\Delta i_A^s$ stellen lässt. Hierbei ist die -10$kHz$ Schwingung lediglich ein zeitdiskret ersichtliches Signal und die tatsächliche, zeitkontinuierliche Injektion hat als tiefsten Frequenzanteil 20$kHz$ und ist damit nicht hörbar.

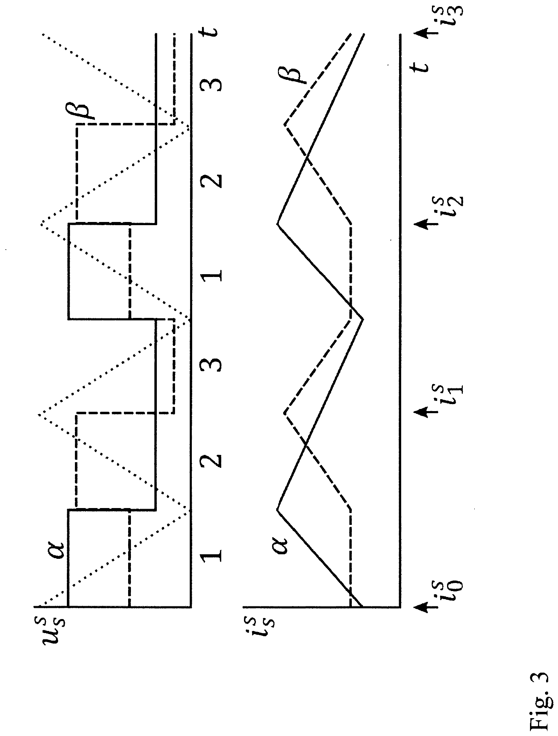

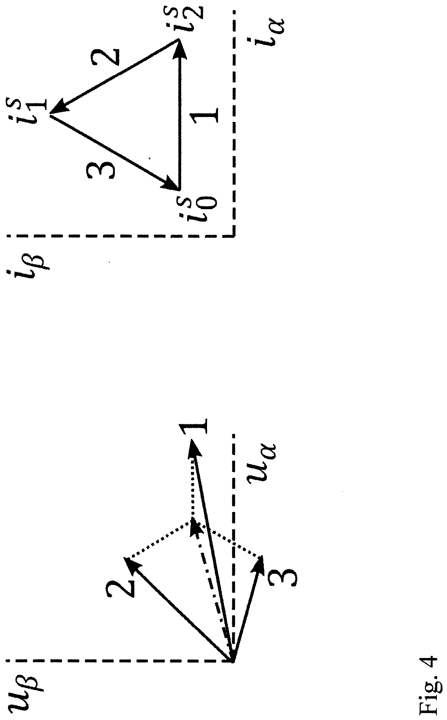

In einem konkreteren Ausführungsbeispiel wird in jeder Halbperiode der 30$kHz$ PWM ein jeweils verschiedener Spannungswert gestellt, sodass sich mittels eines dreieckigen Injektionsmuster eine rotierende Injektion mit $f_{inj}$ = 20$kHz$ ergibt, wie sie im oberen Teil von Fig. 3 komponentenweise über der Zeit und in Fig. 4 links in statorfesten Koordinaten beispielhaft dargestellt ist. Damit haben zwei Injektionsperioden die gleiche Dauer wie drei Perioden der Pulsweitenmodulation. Im Injektionsschritt 1 wird die Injektionsspannung in Richtung Phase a, im Schritt 2 Richtung b und im Schritt 3 Richtung c auf die Grundwellenspannung addiert. Wie im unteren Teil von Fig. 3 und in Fig. 4 rechts dargestellt, ergibt sich eine ebenfalls mit 20$kHz$ rotierende Stromantwort, welche mittels Emittershunt-Messung mit $f_s$ = 30$kHz$ abgetastet wird. Die Abtastzeitpunkte werden durch die Pfeile in Fig. 3 markiert, wo sich die Strommesswerte $i_0^s, i_1^s, i_2^s$ und $i_3^s$ ergeben. In Fig. 4 rechts ist zu erkennen, wie diese Messwerte in Statorkoordinaten rückwärts rotierend angeordnet sind. Denn sie ergeben das mit $f_A$ = -10$kHz$ rotierende Alias-Signal $\Delta i_A^s$, welches gemäß (10) wieder im Zusammenhang der Alias-Spannung (11) steht.

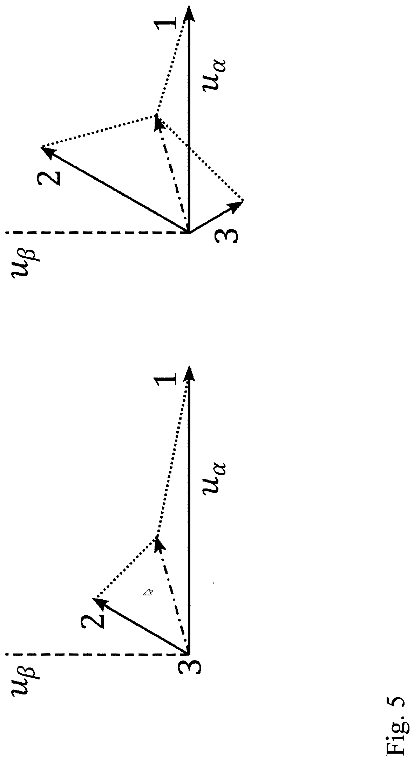

In einem weiteren Ausführungsbeispiel wird die Injektion nicht einfach auf die Grundwellenspannung aufaddiert, sondern es werden in drei aufeinanderfolgenden PWM-Halbperioden drei verschiedene Sub-Spannungswerte (Zeiger) gestellt, die jeweils genau mit einer Phasenachse (a, b oder c) ausgerichtet sind und dabei jeweils untereinander eine Differenz aufweisen, die mindestens der Injektionsamplitude entspricht. Zwei solche Zeigerfolgen sind beispielhaft in Fig. 5 dargestellt. Dabei wird der Betrag eines jeden Sub-Spannungszeigers so gewählt, dass sich als Mittelwert der drei Zeiger die vom Stromregler angeforderte Grundwellenspannung ergibt.

In der linken beispielhaften Zeigerfolge werden einfach die von der Raumzeigermodulation aus der Grundwellenspannung geplanten Zeiger jeweils separat mit dreifachem Betrag gestellt, wodurch zwangsläufig ein Zeiger (in diesem Fall der dritte) Null ist. Falls die resultierende Differenz zwischen den drei Zeigern hinsichtlich der Injektionsamplitude nicht genügen sollte, kann nach Belieben auf alle drei Zeiger ein gleichgroßer Betrag addiert (oder subtrahiert) werden, was, wie im linken Teil von Fig. 5 dargestellt, den Spannungsmittelwert nicht beeinflusst, aber den Injektionsanteil vergrößert. Wenn die zeitliche Reihenfolge der herangezogenen Phasenachsen in jedem Injektionszyklus gleich ist, ergibt sich auch bei dieser konkreten Injektionsform als tiefster Frequenzanteil die Injektionsfrequenz, d.h. in obigem Beispiel 20kHz.

Der besondere Vorteil einer solchen Umsetzung von Grundwellen- und Injektionsanteil, liegt in der Unterdrückung schwacher Frequenzkomponenten im hörbaren Bereich, die entstehen, wenn sich bei Kombination von ungeradzahligen Injektionsmustern mit symmetrischer PWM die Grundwellen- und Injektionsspannung überlagern. Denn bei einer solchen Kombination wird beispielsweise der Zeiger 1 in einem Injektionszyklus mit abfallendem PWM-Counter generiert und im darauffolgenden Injektionszyklus mit aufsteigendem PWM-Counter (vgl. Fig. 3), wodurch die Schaltzustandsreihenfolge zur Konstruktion des Zeigers von der symmetrischen PWM vertauscht wird. Diese Vertauschung wiederholt sich in jedem zweiten Injektionszyklus, woraus ein schwaches Geräusch bei halber Injektionsfrequenz resultieren kann. Dieses Geräusch wird vermieden, wenn in jedem PWM-Halbintervall keine (vertauschbare) Schaltzustandskombination, sondern mittels Sollzeigern in Phasenrichtung nur einzelne Schaltzustände gestellt werden, die von der PWM nicht vertauscht werden können.

**Literaturverzeichnis**

[1] M. Schrödl, "Detection of the rotor position of a permanent magnet synchronous machine at standstill," IEEE Conf. ICEM, p. 51-56, 1988.

[2] P. L. Jansen und R. D. Lorenz, "Transducerless position and velocity estimation in induction and salient ac machines," IEEE Trans. on Industrial Applications, vol. 31, p. 240-247, 1995.

[3] M. J. Corley und R. D. Lorenz, "Rotor position and velocity estimation for a salient-pole permanent magnet synchronous machine at standstill and high speeds," IEEE Trans. on Industrial Applications, vol. 34, p. 784-789, 1998.

[4] D. Paulus, P. Landsmann und R. Kennel, "Sensorless field- oriented control for permanent magnet synchronous machines with an arbitrary injection scheme and direct angle calculation," IEEE Conf. SLED, pp. 41-46, 2011.

[5] P. Landsmann.DE, EP, WO Patent DE102015217986A1, 2015.

[6] D. Paulus, P. Landsmann, S. Kuehl und R. Kennel, "Arbitrary injection for permanent magnet synchronous machines with multiple saliencies," in IEEE Conf. ECCE, Denver, 2013.

[7] T. Frenzke, "Impacts of cross-saturation on sensoriess control of surface permanent magnet synchronous motors," in Conf. EPE, Dresden, 2005.

[8] D. Reigosa, P. Garcia, D. Raca, F. Briz und R. D. Lorenz, "Measurement and Adaptive Decoupling of Cross-Saturation Effects and Secondary Saliencies in Sensorless-Controlled IPM Synchronous Machines," in IEEE Industry Applications Annual Meeting, New Orleans, 2007.

[9] S. Paulus und G. Götting, "Self-sensing control of permanent-magnet synchronous machines with reluctance and saturation effects using highfrequency signal injection," in APEC, Long Beach, 2013.

[10] P. Landsmann, D. Paulus und S. Kühl, "Verfahren und Vorrichtung zur regelung eines Synchronmotors ohne Lagegeber mittels eindeutiger Zuordunung der Admittanz oder Induktivität zur Rotorlage". DE, WO Patent DE102018006657A1, 17 8 2018.

## Patentansprüche

1. Verfahren zur Identifikation der magnetischen Anisotropie einer elektrischen Drehfeldmaschine, umfassend einen Rotor und einen Stator, wobei die Drehfeldmaschine über getaktete Klemmspannungen nach dem Verfahren der Pulsweitenmodulation angesteuert wird und der Strom der Drehfeldmaschine zyklisch gemessen wird, wobei der Grundwellenspannung eine periodische Injektionsspannung überlagert ist, und aus der angelegten Spannung und dem gemessenen Strom die aktuelle Induktivität und/oder Admittanz der Drehfeldmaschine berechnet wird, mit den Zweck die aktuelle Rotorlage zu bestimmen, **dadurch gekennzeichnet, dass** die Periodendauer der Injektionsspannung kürzer ist als das Zweifache der Zykluszeit der Strommessung.

2. Verfahren nach Anspruch 1, **dadurch gekennzeichnet, dass** die Zykluszeit der Strommessung gleichlang oder länger ist als die Periodendauer der Pulsweitenmodulation.

3. Verfahren nach Anspruch 1 oder 2, **dadurch gekennzeichnet, dass** zwei Periodendauern der Injektionsspannung die gleiche Länge haben wie drei Periodendauern der Pulsweitenmodulation.

4. Verfahren nach einem der vorhergehenden Ansprüche, **dadurch gekennzeichnet, dass** die Strommessung über Messwiderstände im unteren Zweig der Halbbrücken der Leistungselektronik erfolgt.

5. Verfahren nach einem der vorhergehenden Ansprüche, **dadurch gekennzeichnet, dass** der zur Berechnung der Induktivität und/oder Admittanz herangezogene Spannungswert als gewichteter Mittelwert mindestens zweier sich unterscheidender Sub-Spannungswerte, gewichtet mit der Dauer des jeweiligen Anliegens derselben, berechnet wird.

6. Verfahren nach Anspruch 5 **dadurch gekennzeichnet, dass** die Sub-Spannungswerte jeweils der mittleren Spannung über mindestens eine halbe Periodendauer der Pulsweitenmodulation entsprechen.

7. Verfahren nach Anspruch 5 oder 6, **dadurch gekennzeichnet, dass** jeder gestellte Sub-Spannungswert jeweils in seiner Orientierung genau mit einer Phasenachse ausgerichtet und nur in seinem Betrag veränderlich ist.

8. Verfahren nach Anspruch 7 **dadurch gekennzeichnet, dass** die zeitliche Reihenfolge der herangezogenen Phasenachsen in jedem Injektionszyklus gleich ist.

9. Vorrichtung zur Steuerung und Regelung einer Drehfeldmaschine mit einem Stator und einem Rotor, die Vorrichtung umfassend: einen steuerbaren PWM-Umrichter zur Ausgabe von getakteten Klemmspannungen, eine Einrichtung zur Erfassung einer Anzahl von Phasenströmen und einen Controller zur Ansteuerung des PWM-Umrichters, wobei der Controller zur Durchführung eines Verfahrens nach einem der vorhergehenden Ansprüche eingerichtet und ausgebildet ist.

10. Synchronmaschine, umfassend einen Stator und einen Rotor mit oder ohne Permanentmagnete, mit einer Vorrichtung zur Steuerung und/oder Regelung einer Drehfeldmaschine nach Anspruch 9.


**Claims**

1. Method for identifying the magnetic anisotropy of an electric rotating field machine, comprising a rotor and a stator, the rotating field machine being driven by clocked terminal voltages using the pulse width modulation method and the current of the rotating field machine being measured cyclically, the fundamental-wave voltage being superimposed by a periodic injection voltage, and the current inductance and/or admittance of the rotating field machine is calculated from the applied voltage and the measured current, with the purpose of determining the current rotor position, **characterized in that** the period of the injection voltage is shorter than twice the cycle time of the current measurement.

2. Method according to Claim 1, **characterized in that** the cycle time of the current measurement is equal to or longer than the period of the pulse width modulation.

3. Method according to claim 1 or 2, **characterized in that** two periods of the injection voltage have the same length as three periods of the pulse width modulation.

4. Method according to one of the preceding claims, **characterized in that** the current measurement is carried out via measuring resistors in the lower branch of the half-bridges of the power electronics.

5. Method according to one of the preceding claims, **characterized in that** the voltage value used to calculate the inductance and/or admittance is calculated as a weighted mean of at least two differing sub-voltage values, weighted by the duration for which they are present.

6. Method according to claim 5, **characterized in that** the sub-voltage values each correspond to the mean voltage over at least half a period of the pulse width modulation.

7. Method according to claim 5 or 6, **characterized in that** each set sub-voltage value is precisely aligned with a phase axis in each case in its orientation and is variable only in its amount.

8. Procedure according to claim 7, **characterized in that** the temporal sequence of the phase axes used is the same in each injection cycle.

9. Device for controlling and regulating a rotating field machine having a stator and a rotor, the device comprising: a controllable PWM converter for outputting clocked terminal voltages, a device for detecting a number of phase currents and a controller for activating the PWM converter, the controller being set up and designed to carry out a method according to one of the preceding claims.

10. Synchronous machine, comprising a stator and a rotor with or without permanent magnets, having a device for controlling and/or regulating a rotating field machine according to claim 9.


**Revendications**

1. Procédé d'identification de l'anisotropie magnétique d'une machine électrique à champ tournant, comprenant un rotor et un stator, la machine à champ tournant étant commandée par des tensions de serrage synchronisées selon le procédé de la modulation de largeur d'impulsion et le courant de la machine à champ tournant étant mesuré de manière cyclique, une tension d'injection périodique étant superposée à la tension d'onde fondamentale, et l'inductance et/ou l'admittance actuelle de la machine à champ tournant est calculée à partir de la tension appliquée et du courant mesuré, dans le but de déterminer la position actuelle du rotor, **caractérisé en ce que** la durée de la période de la tension d'injection est plus courte que le double de la durée du cycle de la mesure du courant.

**2.** Procédé selon la revendication 1, **caractérisé en ce que** la durée du cycle de la mesure du courant est égale ou supérieure à la durée de la période de la modulation de largeur d'impulsion.

**3.** Procédé selon la revendication 1 ou 2, **caractérisé en ce que** deux durées de période de la tension d'injection ont la même longueur que trois durées de période de la modulation de largeur d'impulsion.

**4.** Procédé selon l'une des revendications précédentes, **caractérisé en ce que** la mesure du courant est effectuée par l'intermédiaire de résistances de mesure dans la branche inférieure des demi-ponts de l'électronique de puissance.

**5.** Procédé selon l'une des revendications précédentes, **caractérisé en ce que** la valeur de tension utilisée pour le calcul de l'inductance et/ou de l'admittance est calculée en tant que valeur moyenne pondérée d'au moins deux valeurs de sous-tension différentes, pondérées par la durée de leur application respective.

**6.** Procédé selon la revendication 5, **caractérisé en ce que** les valeurs de sous-tension correspondent chacune à la tension moyenne sur au moins une demi-période de la modulation de largeur d'impulsion.

**7.** Procédé selon la revendication 5 ou 6, **caractérisé en ce que** chaque valeur de sous-tension réglée est respectivement alignée dans son orientation exactement avec un axe de phase et n'est variable que dans sa valeur absolue.

**8.** Procédé selon la revendication 7, **caractérisé en ce que** l'ordre temporel des axes de phase utilisés est le même dans chaque cycle d'injection.

**9.** Dispositif de commande et de régulation d'une machine à champ tournant avec un stator et un rotor, le dispositif comprenant: un convertisseur PWM commandable pour la sortie de tensions de serrage synchronisées, un dispositif pour la détection d'un certain nombre de courants de phase et un contrôleur pour la commande du convertisseur PWM, le contrôleur étant aménagé et conçu pour l'exécution d'un procédé selon l'une des revendications précédentes.

**10.** Machine synchrone, comprenant un stator et un rotor avec ou sans aimants permanents, avec un dispositif de commande et/ou de régulation d'une machine à champ tournant selon la revendication 9.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015217986 A1

- DE 102018006657 A1, P. Landsmann, D. Paulus und S. Kühl

**In der Beschreibung aufgeführte Nicht-Patentliteratur**

- **M. SCHRÖDL**. Detection of the rotor position of a permanent magnet synchronous machine at standstill. *IEEE Conf. ICEM*, 1988, 51-56
- **P. L. JANSEN** ; **R. D. LORENZ**. Transducerless position and velocity estimation in induction and salient ac machines. *IEEE Trans. on Industrial Applications*, 1995, vol. 31, 240-247
- **M. J. CORLEY** ; **R. D. LORENZ**. Rotor position and velocity estimation for a salient-pole permanent magnet synchronous machine at standstill and high speeds. *IEEE Trans. on Industrial Applications*, 1998, vol. 34, 784-789
- **D. PAULUS** ; **P. LANDSMANN** ; **R. KENNEL**. Sensorless field- oriented control for permanent magnet synchronous machines with an arbitrary injection scheme and direct angle calculation. *IEEE Conf. SLED*, 2011, 41-46

- **D. PAULUS** ; **P. LANDSMANN** ; **S. KUEHL** ; **R. KENNEL**. Arbitrary injection for permanent magnet synchronous machines with multiple saliencies. *IEEE Conf. ECCE*, 2013
- **T. FRENZKE**. Impacts of cross-saturation on sensoriess control of surface permanent magnet synchronous motors. *Conf. EPE*, 2005
- **D. REIGOSA** ; **P. GARCIA** ; **D. RACA** ; **F. BRIZ** ; **R. D. LORENZ**. Measurement and Adaptive Decoupling of Cross-Saturation Effects and Secondary Saliencies in Sensorless-Controlled IPM Synchronous Machines. *IEEE Industry Applications Annual Meeting*, 2007
- **S. PAULUS** ; **G. GÖTTING**. Self-sensing control of permanent-magnet synchronous machines with reluctance and saturation effects using highfrequency signal injection. *APEC*, 2013